# EUROPEAN PATENT SPECIFICATION

(11) **EP 1 615 746 B1**
(45) Date of publication and mention of the grant of the patent: **25.06.2008**
(21) Application number: 04749362.2
(22) Date of filing: 10.03.2004
(51) Int. Cl.: B24B 1/00

(54) **MULTI-CARBIDE MATERIAL MANUFACTURE AND USE**
HERSTELLUNG UND VERWENDUNG VON MEHRKARBIDMATERIALIEN
FABRICATION ET UTILISATION D'UN MATERIAU MULTI-CARBURE

(30) Priority: 11.03.2003 US 453427 P
(43) Date of publication of application: 18.01.2006
(73) Proprietor: Primet Precision Materials, Inc., Ithaca, NY 14850 (US)
(72) Inventor: DOBBS, Robert, Newfield, NY 14867 (US)
(74) Representative: HOFFMANN EITLE
(86) International application number: PCT/US2004/007290
(87) International publication number: WO 2004/110699

(56) References cited:
- US-A- 3 737 289
- US-A- 3 804 367
- US-A1- 2002 047 058

## Description

### FIELD OF THE INVENTION

This invention relates generally to the field of milling in a media mill, as e.g. known from document US-A-2002/0047058.

### BACKGROUND OF THE INVENTION

In the art of material science carbide materials are well-known. They include a range of compounds composed of carbon and one or more carbide-forming elements such as chromium, hafnium, molybdenum, niobium, rhenium, tantalum, thallium, titanium, tungsten, vanadium, zirconium, and others. Carbides are known for their extreme hardness with high temperature tolerance, properties rendering them well-suited for applications as cutting tools, drilling bits, and similar uses. Multi-element carbides are known for their improved toughness and hardness relative to single element carbides. Single element carbides are typically used with a metal binder to impart toughness.

Multi-carbides are formed by combining two or more carbide-forming elements with carbon. Some multi-carbides have other non-carbide forming elements in the composition, such as nitrogen, but are here referred to simply as multi-carbides since the dominant components are carbide-forming elements. For example, a combination of tungsten and titanium with carbon and nitrogen would be such a multi-carbide material. Some multi-carbide compositions are formed with a deficiency of carbon resulting in some small percentage of carbide-forming element not being converted to a carbide and instead remaining as uncombined elemental metal. These combinations can enhance certain of the favorable qualities of carbides, with some combinations increasing hardness, others increasing toughness, and so forth. Very small variations in composition can greatly affect the material's properties. Many of these variations are well understood by practitioners of the art and are amply published.

Spheres and solid bodies of other specific shapes, whether of carbide or multi-carbide, are difficult to manufacture due to the very properties that make them useful. Their high melting point necessitates a powerful energy source with difficulty in temperature regulation and effect, and their hardness makes them costly to machine.

For example, a primary manufacturing method used to manufacture carbides is to place the elements to be fused on the recessed surface of a large electrode. A very high current is passed from that electrode through the material and into another electrode in proximity, subjecting the material to the heat of an electric arc. This process is effective in fusing the materials, but causes inconsistent mixing of the elements in the compound and some uncontrolled loss of material due to vaporization, phenomena that can greatly compromise the properties of the resulting compound in uncontrolled and unpredictable ways. Hardness is also a challenge, as the manufacturing process results in an irregularly-shaped lump of resulting compound that is generally a few inches in diameter, colorfully known as a "cow chip". The "chip" is very hard, and is worked into smaller shapes only by percussive shocking or other crushing method that cleaves the chip into useful sizes. These processes leave small cracks in the finished product that greatly reduce both its hardness and its mechanical toughness. Re-melting of the material after crushing imposes high cost, and cannot efficiently achieve regular particle sizes or shapes. Consequently, although carbide is available in small spheres and other preferred shapes, those spheres are not optimally composed, they are irregularly sized, they are expensive, and they are lacking in effectiveness.

The known art currently does not have a process whereby multi-carbide materials can be formed into small and regular shapes without loss of optimized properties due to process variation in manufacture or degradation of material during shaping.

Reducing of particles, also known as comminution, is a very old art, practiced for example by the ancients to produce flour from grain by stone wheel grinding. Later practices required smaller and more regular powders for a variety of industrial applications, and more refined techniques were developed to produce those products, such as media milling. Modem technologies and practices now demand ever-finer particles, measured in microns, thousandths of microns, and even angstroms; and with greater regularity of particle size and purity at these reduced dimensions.

Just as stone wheel grinding could not reliably provide the powders needed for earlier industrial processes, current media mills and similar technologies cannot reliably provide the ultra-fine and ultra-regular particles now required for certain applications.

Various methods for reducing the size of particles have been employed. Many use materials such as spheres, rods or more irregular objects ("grinding media") to crush or beat the material to be reduced ("product material") to smaller dimensions by processes known as grinding, milling, comminution, or dispersion. Grinding media range greatly in size, from ore crushers that are several inches in diameter, down to micron-sized particles that are themselves used to mill much smaller particles. Grinding media also vary greatly in shape, including spherical, semi-spherical, oblate spherical, cylindrical, diagonal, rods, and other shapes (hereinafter "shaped media"), and irregular natural shapes such as grains of sand.

Grinding media are used in various devices such ball mills, rod mills, attritor mills, stirred media mills, pebble mills, etc. Regardless of their differences in design, all mills operate by distributing product material around the grinding media and by causing collisions to occur between grinding media units such that product material particles are positioned between the colliding grinding media units. These collisions cause fracturing of product material particles into to smaller dimensions, an effect known descriptively as "size reduction" or "comminution."

The materials used as grinding media also are frequently used as applied abrasives. For example, such materials are aggregated in molds and held together by a binder such as molten metal that is poured into the mold and cooled, rendering a "hard body" that is impregnated by the binder material. Hard body materials (also known as "hard bodies") of this kind are used in deep-well drilling and other applications. Similar processes are used to impregnate the materials in grinding discs and wheels. Various adhesives are used to bind the materials to textiles, papers and other strata for use as sandpapers, sanding belts, and similar products.

Different grinding and milling techniques produce different mean product material particle sizes and uniformity. Gross differences in result are obtained primarily as a function of the size and shape of the grinding media. Large grinding media produce relatively large and irregular product material particles that are suitable for coarse processes or for further refinement by finer processes. Small grinding media can be used to produce finer and more regular materials as an end in itself, or to alter crystallite aggregates, or to cause mechanochemical alloying, or some combination thereof. Small grinding media are also used for polishing, burnishing, and deburring. Mills are sometimes used in series, with progressively smaller grinding media employed to further reduce product material particle size in stages. Variation of the shape of the grinding media generally affects the regularity of particle size, the efficiency of the milling process, the total cost to achieve a given size reduction, and other factors. These effects generally are well known in the art.

Extremely small particle sizes are proving to be useful for many new applications. however, the size reduction and regularity necessary for standardized, acceptable results cannot be achieved by any current milling methods. Production now requires alternate particle fabrication methods such as chemical precipitation, either at a fast rate with unacceptable process variation, or at very slow rates, with unacceptable time and expense.

Other important effects are obtained by varying the composition of the grinding media itself. Three material properties dominantly affect grinding media performance: hardness, mass density, and mechanical toughness. Hardness of the grinding medium determines milling effectiveness, mass density determines milling efficiency, while mechanical toughness determines product purity and overall process efficiency. Hard materials transfer energy efficiently in collisions with product material for effective milling, high-density materials increase the energy transfer per collision with product material and thus increase milling efficiency, especially for small-dimension grinding media, and tough materials can be used for longer periods before they fail and contaminate the product material or otherwise require replacement. An ideal milling material is thus very hard, of very high mass density, and very tough. Preferably, those qualities will hold as the size of the grinding media is reduced, and regardless of the chosen shape of the grinding media.

The history of engineering materials for grinding media is a history of accepting tradeoffs among these material properties, as improvement in one of these factors has previously produced an offsetting reduction in one or more of the others. For example, yttria-stabilized zirconia shows good mechanical toughness, but with low mass density. Various metal media have relatively high mass density, but low mechanical toughness. Carbides showed extreme hardness and mass density, even in small dimensions, but with unavoidable media failures that cause unacceptable product contamination and more general process failures that are incompatible with many applications.

U.S. Patent No. 5,407,564 (Kaliski) is illustrative. Kaliski discloses a range of high mass density, single-element carbides selected from tungsten, thallium, niobium, and vanadium in sizes ranging between 10 and 100 microns with a requirement of high theoretical density. As Kaliski explains, high theoretical density, nonporous materials are needed. These materials showed impressive results in producing fine and regular product material in small quantities under controlled laboratory conditions. Duplication of his example showed his invention to cause contamination of the milled product, as longer-term and higher-volume production attempts failed due to lack of mechanical toughness that caused metallic and other contamination of product material. High density ceramics without metal binders, such as tungsten carbide combined with tungsten di-carbide, also are disclosed by Kaliski as a means to obtain high milling efficiency but with contamination of product material from the grinding media. Kaliski specifically recommends choosing among his claimed materials to select those whose contaminants provide the most good, or at least do the least damage, to the milled product. These materials changed the nature of but did not resolve the product material contaminant issue, and did not solve the mechanical toughness problem. Rather, these materials tended to fail by degradation into hard, fine and irregular shards that acted as abrasives in the media mill, contaminating the product and on one occasion seriously damaging the mill itself.

U.S. Patent No. 5,704,556 (McLaughlin) discloses ceramic grinding media without metal binders in dimensions of less than 100 microns diameter. While these materials are acceptably hard, and show greater mechanical toughness than those disclosed in Kaliski, they lack adequate density for many applications or for optimum efficiency in others.

The inventor of the present invention made an effort to make suitable grinding media from available spherical carbides, of which only single element carbides are known in the art. Tungsten carbide/tungsten di-carbide spheres were purchased in conformance to Kaliski's specification and used in a shaker mill, but comminution to the degree cited by Kaliski was not evident. Plasma-processed spherical tungsten carbide/tungsten di-carbide was also purchased from another source, in conformance to Kaliski's specification, in sufficient quantity to test on a production scale. This grinding media fractured due to insufficient mechanical toughness, contaminating the product and extensively damaging the media mill. Tungsten carbide failed due to the lack of mechanical toughness despite experimental variation of media velocity, flow rate, material volume, and other milling variables. Grinding media material in conformance to Kaliski's specification was obtained from several difference sources worldwide, but differences in sourcing produced no significant difference in results. In all attempts with all materials supplied to the Kaliski specification, the level of product contamination was a limitation on usefulness.

U.S. Patent No. 2,581,414 (Hochberg), U.S. Patent No. 5,478,705 (Czekai), and U.S. Patent No. 5,518,187 (Bruno) disclose polymer grinding media which show high mechanical toughness and cause relatively benign product material contamination upon grinding media failure. However, they show low hardness and density relative to ceramics. Polymer grinding media thus can be useful in milling relatively soft product materials that are sensitive to product contamination, and in industries that are relatively insensitive to processing cost, such as in drug processing or in dispersing biological cells for analysis, but they are not appropriate for the majority of industrial applications.

U.S. Patent Nos. 3,690,962; 3,737,289; 3,779,745; 3,840,367 and 4,066,451 (all to Rudy) disclose certain multi-carbides for use as cutting tools. Although the multi-carbides disclosed showed a combination of hardness, density and mechanical toughness that promised to be useful for milling, the known geometries for available multi-carbide materials rendered them incompatible with such use. Difficulties included the large size of multi-carbide material that is produced by current manufacturing methods, and difficulty in machining or otherwise manipulating the material into sizes and shapes useful for milling due in part to its hardness and mechanical toughness.

V. N. Eremenko, et al, "Investigations of alloys or the ternary systems W-HfC-C and W-ZrC-C at subsolidus temperatures," Dokl.Akad. Nauk. Ukr. SSSR, Ser. A No. 1, 83-88 (1976); L.V. Artyukb, et al, "Physicochemical reactions of tungsten carbide with hafnium carbide," Izv. Akad. Nauk SSSR, Neorg. Mater., No. 4, 634-637 (1976); and T. Ya. Velikanova, et al, "Effect of alloying on the structure and properties of cast WC1-x Materials," Poroshkovaya Metallurgiya, No. 2 (218), 53-58, (1981) teach how sensitive the properties of single element carbides can be to small additions of other carbide forming elements. This fact has greatly inhibited research into multi-carbide elements.

As summarized above, the grinding media of the prior art all suffer some technical disadvantage resulting in a proliferation of grinding media materials creating a significant economic burden and also resulting in technically inferior milled products due to contamination.

### SUMMARY OF THE INVENTION

The invention is defined in the independent claims 1 and 12. The dependent claims are directed to optional and preferred features.

Briefly stated, grinding media includes shaped media, such as spheres or rods, ranging in size from 0.5 micron to 100 mm in diameter. The media are of a multi-carbide material consisting essentially of two different carbide-forming elements and carbon, either with or without an elemental form of a carbide-forming element. The media have extremely high mass density, extreme hardness, and extreme mechanical toughness.

The grinding media are multi-carbide materials consisting essentially of carbon and at least two different carbide-forming elements wherein the multi-carbide material is formed into shaped grinding media ranging in size from 0.5 micron to 100 mm in diameter.

The grinding media are formed from a multi-carbide material consisting essentially of carbon and at least two different carbide-forming elements for use in a media mill.

The method for making grinding media can include the step of forming the media from a multi-carbide material consisting essentially of carbon and one element selected from the group consisting of chromium, hafnium, niobium, tantalum, titanium, tungsten, molybdenum, vanadium, and zirconium, along with the elemental metal of the carbide.

The invention provides a method for milling a product in a media mill which includes the step of using media consisting essentially of a multi-carbide material which consists essentially of carbon and at least two carbide-forming elements wherein the multi-carbide is formed as the media used in the media mill.

The invention provides a method for milling a product in a media mill which includes the step of using carbide media consisting essentially of carbon and one element selected from the group consisting of chromium, hafnium, molybdenum, niobium, rhenium, tantalum, thallium, titanium, tungsten, vanadium, and zirconium, along with the elemental metal of the carbide.

### BRIEF DESCRIPTION OF THE DRAWINGS

Fig. 1 shows particles produced according to the prior art.

Fig. 2 shows particles produced according to an embodiment of the present invention.

### DETAILED DESCRIPTION OF THE PREFERRED EMBODIMENT

A multi-carbide material is formed from a combination of carbon and two or more different carbide-forming elements ("multi-carbide material", defined more fully below). Multi-carbide materials have extreme hardness, extreme density, and extreme mechanical toughness. In the present invention, the selection of carbide-forming elements of the multi-carbide materials, and the precise proportional composition for any combination of those elements, is modified to alter the properties of the material. Multi-carbide material is combined with one or more elemental metals of the chosen carbide to alter ductility and other properties of the material. Multi-carbide material is formed effectively and efficiently into a variety of shaped media, preferably into spheres, by the use of novel manufacturing methods.

The manufacturing method maintains proper element composition to optimize desired material properties, produces useful shaped media, avoids crushing or other degradation of the material to create said shaped media, and greatly lowers manufacturing cost to produce shaped media formed from such material while improving the quality of the material obtained. The manufacturing method produces small and regular spheres of optimized multi-carbide material that is suitable for use as grinding media in media mills ("multi-carbide grinding media"). The multi-carbide grinding media of the present invention are used in shaped media ranging in size from 100 mm down to 0.5 microns or less while maintaining their effective material properties. The multi-carbide grinding media are used in media mills and other extant milling processes of varying design and capacity. By such use of such multi-carbide grinding media, greater product material size reduction, size regulation, and purity can be achieved than by utilization of extant milling media materials.

Such use improves the efficiency and outcome of current particle size reduction methods. Less effective methods could be used as preliminary process steps to produce particles of relatively great size and irregularity, with those particles being further refined by the invention.

The multi-carbide grinding media utilised in the present invention are used effectively in media mills for the manufacture of materials in dimensions and purities that previously were unattainable ("ultra-fine particles'). Ultra-fine particles will enable the manufacture of products previously unattainable, or attainable only by less effective or more expensive methods. Examples include sub-micron sized oxides, such as oxides of titanium. Reduction of certain oxides of titania with sufficiently low impurities causes that compound to exhibit special properties including high transparency. Fine size reduction of pigments improve the efficiency of color distribution in dyes and paints. Similar results are obtained by high refinement of varnishes and other finishes. Ultra-fine particles of certain metals and other materials, such as cobalt, hydrides, molybdenum, nitrides, titanium, tungsten, and various alloys and other compounds of the same, will permit the manufacture of those materials at previously-unachieved economic or performance properties and in superalloy and other combinations not previously obtainable. Diamond particles can be reduced to dimensions not previously obtainable due to their hardness relative to known grinding media, permitting more efficient use of diamond particles at reduced cost. Ultra-fine particles will become available that can be formed by molding, electrostatic deposition and other known methods into microelectromechanical products and other micron-scale devices that previously were obtainable only by etching of glass or silicon or other semiconductors. Ultra-fine particles can be introduced to certain liquids to form fluids that exhibit special properties of heat transmission, solubility and other qualities.

Through use of the invention, samples produced either by more coarse milling or by high-rate precipitation are further refined through media milling process with multi-carbide grinding media to preferred specifications at high speed and relatively low cost. Other valuable materials are made uniquely possible by the claimed methods of the invention.

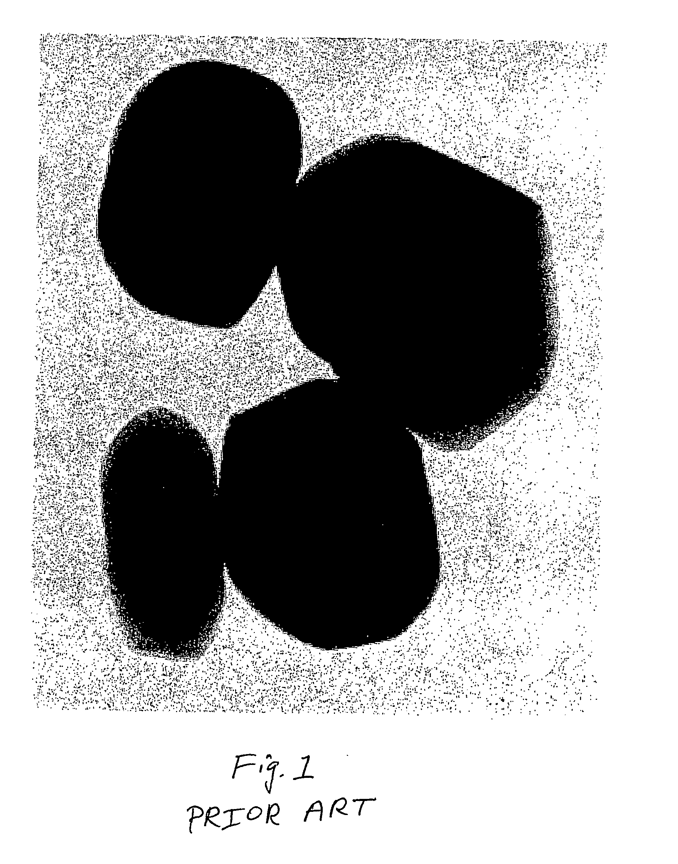

The invention also permits the manufacture of ultra-fine particles with geometries superior to those achieved by known manufacturing methods. For example, chemical precipitation can create particles of certain materials in extremely small dimensions. Those particles, however, generally exhibit smooth and rounded shapes. Fig. 1 shows particles that were assembled atomistically by precipitation. Such particles are also typical of those particles produced by known means such as sol gel, vapor phase condensation, etc. The science dealing with the surface topography of particles speaks in terms of a fractured surface which has discernible cleavage facets and cleavage steps. These two features are specifically absent from the particles produced by the known processing methods for producing very small particles. Another missing feature in particles produced according to prior art methods is concavity. Concavity is defined as that condition where some portion of the surface lies beneath the surrounding surface. In precipitated particles, the surface is bulbulous, meaning that a portion of the surface protrudes above the surrounding surface such as is always true in the case of a sphere.

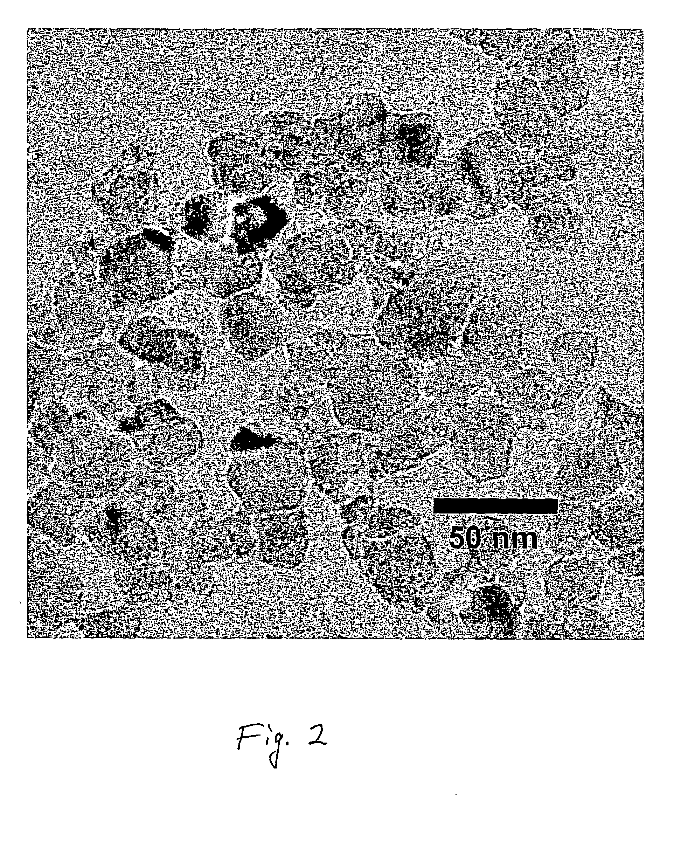

As shown in Fig. 2, ultra-fine particles produced by milling according to the present invention exhibit more angular geometries with cleaved surfaces and angular intersecting surfaces that exhibit higher activity relative to the materials formed by other means, causing ultra-fine milled particles to tend to exhibit superior chemical and mechanical properties over particles of similar size and dimension that are manufactured by precipitation and similar methods. Note the corners, flat edges, etc. of the very small particles produced by the milling method of the present invention.

A catalyst produced according to the present invention is less than 30 x 10⁻⁹ meters in all dimensions and possesses cleaved surfaces, the catalyst being uniquely distinguishable by its particle surface features having a preponderance of cleavage facets and/or cleavage steps, the catalyst alternatively being uniquely distinguishable by the acutance of a preponderance of intersecting surfaces in which the arc length of the edge is less than the radius of the edge, the catalyst alternatively being uniquely distinguishable by surface concavities greater than 5% of the particle diameter, the catalyst alternatively being uniquely distinguishable by the acutance of a preponderance of intersecting surfaces in which the included angle of the edge radius is about, or less than, the included angle of the intersecting surfaces.

Intermetallic particles produced according to the present invention have less than 30 x 10⁻⁹ meters in all dimensions and possess cleaved surfaces. The product is uniquely distinguishable by its particle surface features having a preponderance of cleavage facets and/or cleavage steps, the product alternatively being uniquely distinguishable by the acutance of a preponderance of intersecting surfaces in which the arc length of the edge is less than the radius of the edge, the catalyst alternatively being uniquely distinguishable by surface concavities greater than 5% of the particle diameter, the product alternatively being uniquely distinguishable by the acutance of a preponderance of intersecting surfaces in which the included angle of the edge radius is about, or less than, the included angle of the intersecting surfaces.

To create multi-carbide grinding media, a compound ("multi-carbide material") is formed from carbon and at least two carbide-forming elements. U.S. Patent Nos. 3,690,962, 3,737,289, 3,779,745, 3940367 and 4,066,451 (all to Rudy), disclose how to make such multi-carbide materials for use as cutting tools.

The multi-carbide material can be formed from carbon and carbide-forming elements selected from the group consisting of chromium, hafnium, molybdenum, niobium, rhenium, tantalum, thallium, titanium, tungsten, vanadium, zirconium, and any other carbide forming element. Multi-carbide material can be formed either with or without some of the carbide-forming elements not being fully carburized and thus remaining in the material in its elemental state. The multi-carbide material can contain a certain amount of impurities and other extraneous elements without significantly affecting its material properties.

The production of spheres from irregular shaped particles can be achieved by various means. One common method of processing ultrahigh melting point materials into spheres is with the use of a thermal plasma torch. Such a torch can operate at temperatures well beyond the melting point of all multi-carbide materials. Other methods, such as melt atomization or arc melting, are known to those familiar with the art and there is no intention to limit the practice to just the use of these named methods. In short, any known technique for applying heat which brings the material to its melting point will work. How to form other shaped media is also known in the art.

The known methods of forming spheres from carbides also form spheres when the known methods are applied to multi-carbide materials, but the acceptable spheres amount to approximately 40 % of the total produced. A new method for producing spheres from multi-carbi materials was therefore developed. The new method for producing spheres from multi-carbide materials is as follows. The multi-carbide material is formed into spheres preferably by admixing fine particles of the elements intended to comprise the multi-carbide material in appropriate ratios, by adequately mixing the components, by maintaining the stability of the mixture by introduction of an inert binding agent, by subdividing the mixture into aggregates each having a mass approximately equal to that of the desired sphere to be formed, by applying heat to the subdivided aggregate sufficient to cause its elements to fuse, and by cooling the fused sphere in a manner that preserves its spherical shape. This manufacturing process is used to make small and regular spheres that are composed of multi-carbide material. Spheres of very small diameters, i.e., less than 500 microns diameter and down to 0.5 microns diameter, with regular geometries and predictable, optimized compositions can be produced.

Spheres of multi-carbide material can be formed in this manner by the use of a thermal plasma torch or vertical thermal tube to raise the temperature of the multi-carbide particles above their melting point as they pass through the plasma or down the tube. Other methods that can so raise the temperature of the multi-carbides, such as melt atomization or arc melting, also should be effective.

Such spheres are then utilized as grinding media in media mills ("multi-carbide grinding media").

Shapes other than spheres can be formed. For example, a variety of shapes can be formed by molding and sintering sufficiently small particles of the multi-carbide material. The geometry of such shapes can be varied nearly arbitrarily to achieve different grinding properties. The manufacturing process is an improvement over the current art in that it forms multi-carbides by processes that better mix and do not vaporize elements during manufacture, improving predictability and performance characteristics of the produced material; and that do not crack or otherwise degrade the material as it is formed into useful shapes, to improve the mechanical toughness of the produced material.

The multi-carbide grinding media, of whatever shape, are used in media mills to achieve efficient and thorough comminution of materials with high purity due to the extreme hardness, extreme density, and extreme mechanical toughness of the material, independent of size or shape. In such applications, particles of product material to be reduced in size are admixed with the colliding grinding media. The product material particles, interspersed between the grinding media units, are rapidly reduced in size. Reductions to controlled dimensions as small as 10⁻⁹ meters can be achieved and readily reproduced with the right combination of initial source material, grinding media and media mill or other reduction process. Due to the engineered material properties of the multi-carbide grinding media, the wear rates of the grinding media units are extremely low and their grinding effectiveness is very high, enabling the efficient conversion of coarse particles into extremely small product size while maintaining high purity. That is, the multi-carbide grinding media deliver virtually no contamination to the product material.

Separation of product from the multi-carbide grinding media is accomplished by various means known in the art, such as washing and filtering or gravity separation. The product particles are much smaller than the grinding media, so separation can be accomplished efficiently and effectively.

Selection of appropriate grinding media material is critical to outcome. Very small variations in the chemical composition of a material can have a great effect upon its performance as a grinding or milling medium. Changes of <0.1 at% of a given element in a carbide have been shown to cause changes of 40% or more in hardness, mechanical toughness, or other important property of the compound.

Media useful in the present invention include mill media of any geometry composed of multiple carbide-forming elements, with carbon, having a density greater than 8 gm/cc and a combination of hardness and toughness sufficient to permit use in a media mill without contamination of the milled product to an amount greater than 800 ppm.

One method for making spheres, composed of multiple carbide-forming elements, with carbon, for use as mill media, or in cladding material, as surfacing material, or in hard body materials containing these spheres, includes the steps of:
(a) obtaining fine particles of appropriate compositions to form the desired composition;
(b) admixing the particles in appropriate ratios to form the desired composition and for adequate mixing of components;
(c) subdividing the mixture into aggregates each having a weight about that of the desired sphere size range; and
(d) fusing the aggregates to at least 90% theoretical density by any means providing temperature, and time at temperature, appropriate for fusion of the components.

One method for producing fine oxides of any metal but in particular titanium, being of a size less than 3 microns and including down to 1x10⁻⁹ using larger particles of oxides of titanium, includes the steps of:
(a) obtaining large particles of oxides, especially of titanium, because such oxide particles are typically much cheaper to procure than fine particles of oxides of titanium, hereinafter such particles being termed feed oxides;
(b) processing the feed oxides in a media mill using spheres of multi-carbide materials with a mass density greater than 8 gm/cc and a hardness and toughness sufficient so as not to contaminate the milled oxides of titanium to a degree greater than 200 ppm; and
(c) processing the feed oxides at an energy intensity to cause size reduction of the feed oxide, in a dry or wet media mill, for a period of time sufficient to reduce the particle size to the preferred size. Such oxides are useful for applications such as pigments, fillers, gas sensors, optronic devices, catalyst, and the manufacture of ceramics, manufacture of components, while being more economic to produce than those obtained by other methods.

One method for producing highly transparent oxides of titanium includes the steps of:
(a) obtaining a slurry of not adequately transparent titania;
(b) processing the titania slurry in a media mill using spheres of multi-carbide material with a mass density greater than 8 gm/cc and a hardness and toughness sufficient to not contaminate the milled oxides of titanium to a degree greater than 100 ppm; and
(c) processing the slurry until the size distribution of the particles has a D 100 of 90x10⁻⁹ meters or less.

One method for producing titanium metal includes the steps of:
(a) obtaining titania feed material, where the feed material is from a high purity source such as readily available chloride processed titania;
(b) processing the titania in a media mill using spheres of multi-carbide material with a mass density greater than 8 gm/cc and a hardness and toughness sufficient not to contaminate the milled oxides of titanium to a degree greater than 800 ppm;
(c) processing the titania at an energy intensity to cause size reduction of the feed oxide, in a dry or wet media mill, for a period of time sufficient to reduce the particle size to about 200 x 10⁻⁹ meters or less;
(d) chemically reducing the titania to titanium metal using a reducing agent such as hydrogen in combination with another reducing agent, if needed, such as a carbothermic reduction agent such as CO or carbon under conditions suitable for oxide reduction without the formation of titanium carbide;
(e) either removing the titanium metal from the reduction equipment without exposure to oxygen or nitrogen under conditions causing oxidation or nitridation of the ultrafine titanium metal or raising the temperature of the ultrafine titanium metal to cause fusion of the particles before removal from the reduction equipment. Other reducing agents are known in the art.

The present invention can be used for producing diamond particles of less than about 100 x 10⁻⁹ meters in all dimensions and, if desired, of a tight particle size distribution, with the diamond particles being usable for CMP (chemical mechanical polishing) and other polishing applications. A method for producing such diamond, that is includes the steps of:
(a) obtaining industrial diamonds of suitable feed material size;
(b) processing the diamonds in a media mill using spheres of multi-carbide material with a mass density greater than 8 gm/cc and a hardness and toughness sufficient cause size reduction of the diamond material;
(c) processing the diamonds at an energy intensity to cause size reduction of the diamond particles, in a dry or wet media mill, for a period of time sufficient to reduce the particle size to between about 100 x 10⁻⁹ meters and about 2 × 10⁻⁹ meters;
(d) purifying the processed diamonds, if necessary to remove contaminants, by chemical dissolution of impurities or by other methods known in the art.

One method for producing devices of silicon or other semiconductors or other materials, of micro or nanoscale dimensions, typically called MEMS, by building the device with ultrafine particles rather than substractively forming the device from solid semiconductor material with etching or other methods, includes the steps of:
(a) obtaining particulate feed material of the desired composition or combinations of particulate materials to be composed into a target composition;
(b) processing the feed material in a media mill using spheres of multi-carbide material with a mass density greater than 8 gm/cc and a hardness and toughness sufficient not to contaminate the milled feed material to a degree greater than 200 ppm;
(c) processing the feed material at an energy intensity to cause size reduction, in a dry or wet media mill, for a period of time sufficient to reduce the particle size to about 200 x 10⁻⁹ meters or less and more preferably to 50 x 10⁻⁹ meters or less;
(d) forming the processed particulates into a molded article, by means known in the art such as pressure molding, injection molding, freeze molding, electrophoretic shaping, electrostatic deposition and other known methods; whereby the forming method allows for creation of unique MEMS devices whereby different parts of the structure can have different materials of construction; and
(e) fusing the molded article to sufficient density to have properties adequate for the intended performance of the device, where such properties are determined specifically by the design application.

One method for producing fine SiC of a size less than 1 micron and including down to 0.001 microns using larger particles of SiC includes the steps of:
(a) obtaining large particles of SiC because such large particles are typically much cheaper to procure than fine particles of SiC, these particles being termed feed particles;
(b) processing the feed particles in a media mill using spheres of multi-carbide material with a mass density greater than 8 gm/cc and a hardness and toughness sufficient not to contaminate the milled particles to a degree greater than 600 ppm; and
(c) processing the feed particles at an energy intensity to cause size reduction of the feed particles, in a dry or wet media mill, for a period of time sufficient to reduce the particle size to the preferred size; with such particles being useful for the manufacture of silicon carbide ceramic bodies, ceramic bodies containing silicon carbide in the composition, applications such as pigments, polishing compounds, polymer fillers, sensors, catalyst, and the manufacture of ceramics, manufacture of components and also being more economic than that obtained by other methods.

One method for producing fine A1203 being of a size less than 1 micron and including down to 0.001 microns using larger particles of A1203 includes the steps of:
(a) obtaining large particles of A1203. Such large particles are typically much cheaper to procure than fine particles of A1203. These particles are termed "feed particles."
(b) processing the feed particles in a media mill using spheres of multi-carbide materials with a mass density greater than 8 gm/cc and a hardness and toughness sufficient not to contaminate the milled particles to a degree greater than 600 ppm; and
(c) processing the feed particles at an energy intensity to cause size reduction of the feed particles, in a dry or wet media mill, for a period of time sufficient to reduce the particle size to the preferred size. Such particles are useful for the manufacture of alumina ceramic bodies, ceramic bodies containing alumina in the composition, applications such as pigments, polishing compounds, polymer fillers, sensors, catalyst, and the manufacture of ceramics, manufacture of components and also are more economic than that obtained by other methods.

One method for producing nanofluids having suspended particles with a size distribution of D50=30 x 10⁻⁹ or less includes the steps of:
(a) obtaining particulate feed material of the desired composition;
(b) processing the feed material in a media mill using spheres of multi-carbide material with a mass density greater than 8 gm/cc and a hardness and toughness sufficient to not contaminate the milled feed material to a degree greater than 400 ppm;
(c) processing the feed material at an energy intensity to cause size reduction, in a dry or wet media mill, for a period of time sufficient to reduce the particle size to a milled product of about 200 x 10⁻⁹ meters or less and more preferably to 50 x 10⁻⁹ meters or less and most preferably to 10 x 10⁻⁹ meters or less;
(d) concentrating the milled product in suitable carrier fluid, such carrier fluids being specified by the application and including water, oil , and organics, with the degree of concentration of particulate material in the fluid being specified by the application.

One method for producing fine tungsten particles of a size less than 400 x 10⁻⁹ meters and including down to 1 × 10⁻⁹ meters using larger particles of tungsten, including the steps of:
(a) obtaining large particles of tungsten because large particles are typically much cheaper to procure than fine particles of tungsten, with the particles being termed feed particles;
(b) nitriding the feed material, such nitride being known to be brittle, by known methods of nitriding such as heating tungsten in dissociated ammonia at 500 degrees C for a length of time proportionate to the feed material size but sufficient to cause nitridation;
(c) processing the nitrided feed particles in a media mill using spheres of multi-carbide material with a mass density greater than 8 gm/cc and a hardness and toughness sufficient not to contaminate the milled particles to a degree greater than 900 ppm;
(d) processing the feed particles at an energy intensity to cause size reduction of the feed particles, in a dry or wet media mill, for a period of time sufficient to reduce the particle size to the preferred size; and
(e) if desired, denitriding the tungsten nitride particulates by heating to about 600 degrees C or higher by methods now known in the art. Such particles are useful for the manufacture of tungsten bodies, tungsten alloy bodies, ceramic bodies containing tungsten in the composition, applications such as pigments, polishing compounds, electronic inks, metallo-organic compounds, polymer fillers, sensors, catalyst, and the manufacture of metal-ceramics, manufacture of components and are also more economic than that obtained by other methods.

One method for producing tungsten components, or tungsten alloy components, from the fine tungsten particles produced by the method detailed in the preceding paragraph, includes the steps of:
(a) obtaining nitrided tungsten milled product of a size less than 400 x 10⁻⁹ meters and more preferably less than 100 x 10⁻⁹ meters and most preferably of less than 50 x 10⁻⁹ meters;
(b) producing tungsten metal components by powder metallurgy processing by consolidation and forming the tungsten nitride prior to denitridation;
(c) denitriding the tungsten nitride component during heating to sintering temperatures with the release of nitrogen contributing to flushing residual gases from between the particles; and
(d) sintering the formed component at temperatures proportionate to the particle size, with these temperatures being substantially less than now required in the art for commercially available tungsten powders.

One method for producing fine molybdenum particles of a size less than 400 x 10⁻⁹ meters and including down to 1 x 10⁻⁹ meters using larger particles of molybdenum includes the steps of:
(a) obtaining large particles of molybdenum, such large particles typically being much cheaper to procure than fine particles of molybdenum, said particles being termed feed particles;
(b) nitriding the feed material, such nitride being known to be brittle, by known methods of nitriding such as heating molybdenum in dissociated ammonia at about 500 degrees C for a length of time proportionate to the feed material size but sufficient to cause nitridation;
(c) processing the nitrided feed particles in a media mill using spheres of multi-carbide material with a mass density greater than 8 gm/cc and a hardness and toughness sufficient to not contaminate the milled particles to a degree greater than 900 ppm;
(d) processing the feed particles at an energy intensity to cause size reduction of the feed particles, in a dry or wet media mill, for a period of time sufficient to reduce the particle size to the preferred size; and
(e) if desired, denitriding the molybdenum nitride particulates by heating to about 600 degrees C or higher by methods now known in the art. Such particles are useful for the manufacture of molybdenum bodies, molybdenum alloy bodies, ceramic bodies containing molybdenum in the composition, electronic inks, metallo-organic compounds, applications such as pigments, polishing compounds, polymer fillers, sensors, catalyst, and the manufacture of metal-ceramics, manufacture of components and also are more economic than particles obtained by other methods.

One method for producing molybdenum or molybdenum alloy components from particles produced according to the method of the preceding paragraph include the steps of:
(a) obtaining nitrided molybdenum milled product of a size less than 400 x 10⁻⁹ meters and more preferably less than 100 x 10⁻⁹ meters and most preferably of less than 50 x 10⁻⁹ meters;
(b) producing molybdenum metal or alloy components by powder metallurgy processing by consolidation and forming the molybdenum nitride prior to denitridation;
(c) denitriding the molybdenum nitride during heating to sintering temperatures with the release of nitrogen contributing to flushing residual gases from between the particles; and
(d) sintering the formed component at temperatures proportionate to the particle size, where these temperatures are substantially less than now required in the art for commercially available molybdenum powders.

One method for producing fine cobalt particles or cobalt nitride particles being of a size less than 5 microns and including down to 1 x 10⁻⁹ meters using larger particles of cobalt includes the steps of:
(a) obtaining large particles of cobalt or cobalt nitride, such large particles typically being gas atomized and therefore much cheaper to procure than fine particles of cobalt or cobalt nitride, with such particles being termed feed particles;
(b) nitriding the feed material, if not already nitrided, such nitride being known to be brittle, by known methods of nitriding such as heating cobalt in dissociated ammonia at about 600 degrees C for a length of time proportionate to the feed material size but sufficient to cause nitridation;
(c) processing the nitrided feed particles in a media mill using spheres of multi-carbide material with a mass density greater than 8 gm/cc and a hardness and toughness sufficient not to contaminate the milled particles to a degree greater than 500 ppm;
(d) processing the feed particles at an energy intensity to cause size reduction of the feed particles, in a dry or wet media mill, for a period of time sufficient to reduce the particle size to the preferred size; and
(e) if desired, denitriding the cobalt nitride particulates by heating to about 600 degrees C or higher by methods now known in the art. Such particles are useful for the manufacture of catalyst, alloy bodies containing cobalt, ceramic bodies containing cobalt in the composition, electronic inks, metallo-organic compounds, applications such as pigments, polishing compounds, polymer fillers, sensors, catalyst, promoters, the manufacture of superalloy components containing cobalt, for use in the hard metals industries where cobalt is a binder metal and also are more economic to produce than those obtained by other methods.

One method for producing fine metal particles from metal nitrides, being of a size less than 20 microns and including down to 1×10⁻⁹ meters using larger particles of metals includes the steps of:
(a) obtaining large particles of metal or metals nitride from that group of metals having nitrides that dissociate when heated from 300 degrees C to about 900 degrees C, such large particles typically being gas atomized and therefore much cheaper to procure than fine particles of metals or metals nitride, such particles being termed feed particles;
(b) nitriding the feed material, if not already nitrided, such nitride being known to be more brittle than metal which is ductile, by known methods of nitriding such as heating metals particles in dissociated ammonia at a temperature sufficient to cause nitridation for a length of time proportionate to the feed material size but sufficient to cause nitridation;
(c) processing the nitrided feed particles in a media mill using spheres of multi-carbide material with a mass density greater than 8 gm/cc and a hardness and toughness sufficient not to contaminate the milled particles to a degree greater than 900 ppm;
(d) processing the feed particles at an energy intensity to cause size reduction of the feed particles, in a dry or wet media mill, for a period of time sufficient to reduce the particle size to the preferred size; and
(e) if desired, denitriding the metals nitride particulates by heating to about 600 degrees C or higher by methods now known in the art. Such particles are useful for the manufacture of catalyst, alloy bodies containing metals, ceramic bodies containing metals in the composition, electronic inks, metallo-organic compounds, applications such as pigments, polishing compounds, polymer fillers, sensors, catalyst, promoters, the manufacture of superalloy components, the manufacture of metal components combining various metals processed by this claim, for use in the hard metals industries where metals is a binder metal and also are more economical to produce than those obtained by other methods.

One method for producing fine metal particles or metal hydride particles from metal hydrides such as titanium and tantalum, being of a size less than 300 x 10⁻⁹ meters and including down to 1 x 10⁻⁹ meters using larger particles of metals includes the steps of:
(a) obtaining large particles of metal hydrides from that group of metals forming hydrides that dissociate when heated, such large particles typically being pressure hydrided and therefore much cheaper to procure than fine particles of metals or metal hydrides, with such particles being termed feed particles;
(b) processing the hydrided feed particles in a media mill using spheres of multi-carbide material with a mass density greater than 8 gm/cc and a hardness and toughness sufficient not to contaminate the milled particles to a degree greater than 900 ppm;
(c) processing the feed particles at an energy intensity to cause size reduction of the feed particles, in a dry or wet media mill, for a period of time sufficient to reduce the particle size to the preferred size; and
(d) if desired, dehydriding the ultrafine metals hydride particulates by heating to the dehydration temperature by methods now known in the art. Such particles are useful for the manufacture of catalyst, alloy bodies containing metals, ceramic bodies containing metals in the composition, electronic inks, metallo-organic compounds, applications such as pigments, polishing compounds, polymer fillers, sensors, catalyst, promoters, the manufacture of superalloy components, the manufacture of metal components combining various metals processed by this claim, for use in the hard metals industries where metals is a binder metal and also being more economic than that obtained by other means

As discussed in the Background section hereinabove, the search for an optimal material to be used as mill media has been ongoing. After much experimentation and testing, multi-carbides were identified by the inventor as a possible material. Although the multi-carbides disclosed by the Rudy patents showed a combination of hardness, density and mechanical toughness that promised to be useful for milling, the known geometries for available multi-carbide materials rendered them incompatible with such use. Difficulties included the large size of multi-carbide material that is produced by current manufacturing methods, and difficulty in machining or otherwise manipulating the material into sizes and shapes useful for milling due in part to its hardness and mechanical toughness.

After extensive analysis and experimentation, the effectiveness of using multi-carbide grinding media was shown empirically in the following experiment. Spheres according to the present invention were formed by taking material composed of Ti, W, and C and preparing spheres 150 microns in diameter. The test composition in this example was 86.7 wt% tungsten, 4.5 wt% carbon, and the balance titanium. Agglomerates of particulates of this test composition were spheridized in an RF Plasma spray unit. The density of the material was confirmed as being the same as the multi-carbide material that was sought to be made.

The multi-carbide spheres of the present invention were then subjected to hardness testing. A compression test was employed in which a single small sphere was isolated between two pieces of ground tungsten plate and a force was applied to one of the plates. The intention was to increase the applied pressure until the sphere fragmented due to the extreme load at the point contact between the plate and the sphere. Unexpectedly, spheres of the test composition did not fracture, but instead embedded into the tungsten plate, demonstrating hardness of the test material well above that of pure tungsten. In a second test, several spheres were positioned between two tungsten plates and the top plate was struck with a weight so as to induce high transitory g-forces on the spheres. None of the spheres fractured, with many of the spheres embedded into the tungsten plate. In two instances of the experiment, the tungsten plate fractured and cleaved, but with no apparent damage to the spheres. In another experiment, spheres of the test composition were placed between two ground glass plates. Upon applying pressure, the glass micro-fragmented around its points of contact with the spheres, but no damage to the spheres was observed.

The multi-carbide spheres were subjected to mechanical toughness testing. Spheres of the test composition were placed in a vibratory mill with calcium carbide and agitated for a period of time sufficient to cause significant grinding media degradation by all known grinding media. No evidence of contamination by grinding media degradation was observed from such use of the resultant spheres, and very fine, regular and pure calcium carbide was obtained.

The multi-carbide spheres were also subjected to testing by use in standard industry processes. The spheres were used in a high-volume media mill and operated under nominal industrial production conditions used to mill titania. Titania is particularly sensitive to discoloration from contamination and was chosen to be a sensitive indicator to see if the microspheres were able to impart wear without themselves wearing significantly. Billions of particles of titania were processed to a final particle size of approximately 7 x 10⁻⁸ meters without perceptible evidence of grinding media degradation.

While testing and processing various materials, impurities were occasionally measured to see how the process was working. Tests were conducted with calcium carbonate processed to less than 100 nm using standard media mill operating conditions and the grinding media of the invention of 120 microns diameter. The contamination level in the milled product was measured to be less than 100 ppm, and in some instances, less than 10 ppm. It is expected that the contamination level should always be below 300 ppm. The contamination level is dependent on the substance being milled, with calcium carbonate being relatively soft. It is expected that the contamination level should always be below 300 ppm even when milling alumina.

While the present invention has been described with reference to a particular preferred embodiment, it will be understood by those skilled in the art that the invention is not limited to the preferred embodiment and that various modifications and the like could be made thereto without departing from the scope of the invention as defined in the following claims.

## Claims

1. A method for milling a product in a media mill, **characterised by** the step of using media comprising a multi-carbide material of carbon and at least two carbide-forming elements wherein said multi-carbide is formed as media for use in a media mill.

2. A method according to claim 1, wherein said carbide-forming elements are selected from chromium, hafnium, molybdenum, niobium, rhenium, tantalum, thallium, titanium, tungsten, vanadium, and zirconium.

3. A method according to claims 1 or 2, wherein said multi-carbide material further includes a carbide-forming element in its elemental state.

4. A method according to claim 3, wherein said multi-carbide material further includes at least one of said carbide-forming elements of said multi-carbide material in its elemental state.

5. A method according to claim 1, wherein said media consists essentially of titanium, tungsten, and carbon, in the ratios of from 10 to 90 at% tungsten, from 2 to 97 at% titanium, and the balance carbon.

6. A method according to claim 1, wherein said media consists essentially of 10 to 40 at% carbon; from 5 to 50 at% titanium, and the balance being tungsten.

7. A method according to claim 1, wherein said media comprises:
a multi-carbide material consisting essentially of from 10 to 40 at% carbon, from 5 to 50 at% titanium, and the balance being tungsten; and
at least one material taken from molybdenum, chromium, and rhenium;
wherein said at least one material is in an amount from 0 to 20 at%, with the tungsten remaining in the composition being not less than 10 at%.

8. A method according to claim 1, wherein said media comprises a multi-carbide material consisting essentially of from 20 to 30 at% carbon; from 5 to 50 at% titanium; from 0 to 30 at% of at least a first material from rhenium, zirconium, hafnium and molybdenum; from 0 to 10 at% of at least a second material taken from vanadium, niobium and tantalum from 0 to 20 at% chromium; with the balance, but not less than 10 at%, being tungsten.

9. A method according to claim 1, wherein said media comprises a multi-carbide material consisting essentially of:
(a) from 15 to 60 at% titanium and first alloying substituents, wherein said first alloying substituents consist of hafnium, niobium, tantalum and zirconium; and
wherein titanium, titanium and niobium, or titanium and niobium and tantalum are present from 0 to 20 at%; wherein titanium or titanium and zirconium are present from 0 to 10 at%; and wherein titanium or titanium and hafnium are present from 0 to 30 at%; and the balance, if any, being titanium;
(b) from 3 to 47 at% tungsten and second alloying substituents, wherein said second alloying substituents consist of chromium, molybdenum, vanadium, tantalum and niobium; wherein tungsten or tungsten and chromium are present from 0 to 5 at%; wherein tungsten or tungsten and molybdenum are present from 0 to 25 at%;
wherein tungsten or tungsten and vanadium are present from 0 to 5 at%; and
wherein tungsten or tungsten and tantalum, tungsten and niobium, or tungsten and tantalum and niobium are present from 0 to 20 at%; and the balance, if any, being tungsten;
(c) carbon from 30 to 55 at%;
(d) wherein the atomic percentages of niobium and tantalum, each alone or in combination, never exceed 20 at%; and
(e) wherein the total at% of all constituents is 100 at%, all of the constituents of the alloy being of normal commercial purity.

10. A method according to any one of claims 1, 2 and 4 to 8 further comprising the step of forming said media into shaped media ranging in size from 0.5 micron to 100 mm in diameter.

11. A method according to claim 10, further comprising the step of forming said media into spheres ranging in size from 0.5 micron to 100 mm in diameter.

12. The use of grinding media, for milling a product in a media mill, **characterized in, that** the grinding media is a multi-carbide material comprising carbon and at least two different carbide-forming elements wherein said multi-carbide material is formed into shaped grinding media ranging in size from 0.5 micron to 100 mm in diameter.

13. Use according to claim 1, wherein said carbide-forming elements are selected from chromium, hafnium, molybdenum, niobium, rhenium, tantalum, thallium, titanium, tungsten, vanadium, and zirconium.

14. Use according to claim 12 or 13, wherein said multi-carbide material further includes a carbide-forming element in its elemental state.

15. Use according to claim 12 or 13, wherein said multi-carbide material further includes at least one of said carbide-forming elements of said multi-carbide material in its elemental state.

16. Use according to claim 12, wherein said grinding media consists essentially of titanium, tungsten, and carbon.

17. Use according to claim 12, wherein said grinding media consists essentially of 10 to 40 at% carbon; from 5 to 50 at% titanium, and the balance being tungsten.

18. Use according to claim 12, the
multi-carbide material consisting essentially of from 10 to 40 at% carbon, from 5 to 50 at% titanium, and the balance being tungsten; and
at least one material taken from molybdenum, chromium, and rhenium;
wherein said at least one material is in an amount from 0 to 20 at%, with the tungsten remaining in the composition being not less than 10 at%.

19. Use according to claim 12, the multi-carbide material consisting essentially of from 20 to 30 at% carbon; from 5 to 50 at% titanium; from 0 to 30 at% of at least a first material from rhenium, zirconium, hafnium and molybdenum; from 0 to 10 at% of at least a second material taken from vanadium, niobium and tantalum; from 0 to 20 at% chromium; with the balance, but not less than 10 at%, being tungsten.

20. Use according to claim 12, the multi-carbide material consisting essentially of:
(a) from 15 to 60 at% titanium and first alloying substituents, wherein said first alloying substituents consist of hafnium, niobium, tantalum and zirconium; and
wherein titanium, titanium and niobium, or titanium and niobium and tantalum are present from 0 to 20 at%; wherein titanium or titanium and zirconium are present from 0 to 10 at%; and wherein titanium or titanium and hafnium are present from 0 to 30 at%; and the balance, if any, being titanium;
(b) from 3 to 47 at% tungsten and second alloying substituents, wherein said second alloying substituents consist of chromium, molybdenum, vanadium, tantalum and niobium; wherein tungsten or tungsten and chromium are present from 0 to 5 at%; wherein tungsten or tungsten and molybdenum are present from 0 to 25 at%;
wherein tungsten or tungsten and vanadium are present from 0 to 5 at%; and
wherein tungsten or tungsten and tantalum, tungsten and niobium, or tungsten and tantalum and niobium are present from 0 to 20 at%; and the balance, if any, being tungsten;
(c) carbon from 30 to 55 at%;
(d) wherein the atomic percentages of niobium and tantalum, each alone or in combination, never exceed 20 at%; and
(e) wherein the total at% of all constituents is 100 at%, all of the constituents of the alloy being of normal commercial purity.

21. Use according to any one of claims 12, 13, 16, 17, 18, 19 or 20, wherein said shaped media are shaped as spheres.

## Patentansprüche

1. Verfahren zum Mahlen eines Produkts in einer Hilfsstoffmühle, **gekennzeichnet durch** den Schritt des Verwendens von Hilfsstoffen umfassend ein Multi-Carbidmaterial aus Kohlenstoff und wenigstens zwei Carbid-bildenden Elementen, wobei das Multi-Carbid als Hilfsstoff zur Verwendung in einer Hilfsstoffmühle gebildet wird.

2. Verfahren gemäß Anspruch 1, wobei die Carbid-bildenden Elemente ausgewählt sind aus Chrom, Hafnium, Molybdän, Niob, Rhenium, Tantal, Thallium, Titan, Wolfram, Vanadium und Zirkonium.

3. Verfahren gemäß Anspruch 1 oder 2, wobei das Multi-Carbidmaterial ferner ein Carbid-bildendes Element in elementarem Zustand umfaßt.

4. Verfahren gemäß Anspruch 3, wobei das Multi-Carbidmaterial ferner mindestens ein Carbid-bildendes Element des Multi-Carbidmaterials in elementarem Zustand umfaßt.

5. Verfahren gemäß Anspruch 1, wobei der Hilfsstoff im wesentlichen aus Titan, Wolfram und Kohlenstoff in den Verhältnissen von 10 bis 90 at% Wolfram, 2 bis 97 at% Titan und dem Rest Kohlenstoff besteht.

6. Verfahren gemäß Anspruch 1, wobei der Hilfsstoff im wesentlichen aus 10 bis 40 at% Kohlenstoff, 5 bis 50 at% Titan und dem Rest Wolfram besteht.

7. Verfahren gemäß Anspruch 1, wobei der Hilfsstoff
ein Multi-Carbidmaterial, das im wesentlichen aus 10 bis 40 at% Kohlenstoff, 5 bis 50 at% Titan und dem Rest Wolfram besteht, und
wenigstens einem Material aus Molybdän, Chrom und Rhenium umfaßt,
wobei das wenigstens eine Material in einer Menge von 0 bis 20 at% vorliegt, wobei das in der Zusammensetzung verbleibende Wolfram nicht weniger als 10 at% beträgt.

8. Verfahren gemäß Anspruch 1, wobei der Hilfsstoff ein Multi-Carbidmaterial umfaßt, das im wesentlichen aus 20 bis 30 at% Kohlenstoff, 5 bis 50 at% Titan, 0 bis 30 at% wenigstens eines ersten Materials aus Rhenium, Zirkonium, Hafnium und Molybdän, 0 bis 10 at% wenigstens eines zweiten Materials aus Vanadium, Niob und Tantal, 0 bis 20 at% Chrom und dem Rest Wolfram, aber nicht weniger als 10 at% besteht.

9. Verfahren gemäß Anspruch 1, wobei der Hilfsstoff ein Multi-Carbidmaterial umfaßt, das im wesentlichen besteht aus
(a) 15 bis 60 at% Titan und ersten legierenden Substituenten, wobei die ersten legierenden Substituenten aus Hafnium, Niob, Tantal und Zirkonium bestehen, und
wobei Titan, Titan und Niob oder Titan und Niob und Tantal in einer Menge von 0 bis 20 at% vorliegen, wobei Titan oder Titan und Zirkonium in einer Menge von 0 bis 10 at% vorliegen, und wobei Titan oder Titan und Hafnium in einer Menge von 0 bis 30 at% vorliegen, und der Rest, falls vorhanden, Titan ist,
(b) 3 bis 47 at% Wolfram und zweiten legierenden Substituenten, wobei die zweiten legierenden Substituten aus Chrom, Molybdän, Vanadium, Tantal und Niob bestehen, wobei Wolfram oder Wolfram und Chrom in einer Menge von 0 bis 5 at% vorliegen, wobei Wolfram oder Wolfram und Molybdän in einer Menge von 0 bis 25 at% vorliegen,
wobei Wolfram oder Wolfram und Vanadium in einer Menge von 0 bis 5 at% vorliegen, und
wobei Wolfram oder Wolfram und Tantal, Wolfram und Niob oder Wolfram und Tantal und Niob in einer Menge von 0 bis 20 at% vorliegen, und der Rest, falls vorhanden, Wolfram ist,
(c) 30 bis 55 at% Kohlenstoff,
(d) wobei die prozentualen Atommengen von Niob und Tantal, einzeln oder in Kombination, niemals 20 at% übersteigen, und
(e) wobei die gesamten at% aller Bestandteile 100 at% sind und alle Bestandteile der Legierung normale handelsübliche Reinheit aufweisen.

10. Verfahren gemäß einem der Ansprüche 1, 2 und 4 bis 8, ferner umfassend den Schritt des Formens des Hilfsstoffs zu einem geformten Hilfsstoff, dessen Größe im Bereich von 0,5 µm bis 100 mm im Durchmesser liegt.

11. Verfahren gemäß Anspruch 10, ferner umfassend den Schritt des Formens des Hilfsstoffs zu Kugeln, deren Größe im Bereich von 0,5 µm bis 100 mm im Durchmesser liegt.

12. Verwendung von Mahlhilfsstoff zum Mahlen eines Produkts in einer Hilfsstoffmühle, **dadurch gekennzeichnet, daß** der Mahlhilfsstoff ein Multi-Carbidmaterial ist, das Kohlenstoff und wenigstens zwei unterschiedliche Carbidbildende Elemente umfaßt, wobei das Multi-Carbidmaterial zu geformten Mahlhilfsstoffen geformt wird, deren Größe im Bereich von 0,5 µm bis 100 mm im Durchmesser liegt.

13. Verwendung gemäß Anspruch 1, wobei die Carbid-bildenden Elemente ausgewählt sind aus Chrom, Hafnium, Molybdän, Niob, Rhenium, Tantal, Thallium, Titan, Wolfram, Vanadium und Zirkonium.

14. Verwendung gemäß Anspruch 12 oder 13, wobei das Multi-Carbidmaterial ferner ein Carbid-bildendes Element in elementarem Zustand enthält.

15. Verwendung gemäß Anspruch 12 oder 13, wobei das Multi-Carbidmaterial ferner wenigstens eines der Carbid-bildenden Elemente des Multi-Carbidmaterials in elementarem Zustand enthält.

16. Verwendung gemäß Anspruch 12, wobei der Mahlhilfsstoff im wesentlichen aus Titan, Wolfram und Kohlenstoff besteht.

17. Verwendung gemäß Anspruch 12, wobei der Mahlhilfsstoff im wesentlichen aus 10 bis 40 at% Kohlenstoff, 5 bis 50 at% Titan und dem Rest Wolfram besteht.

18. Verwendung gemäß Anspruch 12, wobei
das Multi-Carbidmaterial im wesentlichen aus 10 bis 40 at% Kohlenstoff, 5 bis 50 at% Titan und dem Rest Wolfram und
wenigstens einem Material aus Molybdän, Chrom und Rhenium besteht,
wobei das wenigstens eine Material in einer Menge von 0 bis 20 at% vorliegt, wobei das in der Zusammensetzung verbleibende Wolfram nicht weniger als 10 at% ist.

19. Verwendung gemäß Anspruch 12, wobei das Multi-Carbidmaterial im wesentlichen besteht aus 20 bis 30 at% Kohlenstoff, 5 bis 50 at% Titan, 0 bis 30 at% wenigstens eines ersten Materials aus Rhenium, Zirkonium, Hafnium und Molybdän, 0 bis 10 at% wenigstens eines zweiten Materials aus Vanadium, Niob und Tantal, 0 bis 20 at% Chrom, und als Rest, aber nicht weniger als 10 at% Wolfram.

20. Verwendung gemäß Anspruch 12, wobei das Multi-Carbidmaterial im wesentlichen besteht aus
(a) 15 bis 60 at% Titan und ersten legierenden Substituenten, wobei die ersten legierenden Substituenten aus Hafnium, Niob, Tantal und Zirkonium bestehen, und
wobei Titan, Titan und Niob oder Titan und Niob und Tantal in einer Menge von 0 bis 20 at% vorliegen, wobei Titan oder Titan und Zirkonium in einer Menge von 0 bis 10 at% vorliegen, und wobei Titan oder Titan und Hafnium in einer Menge von 0 bis 30 at% vorliegen, und der Rest, falls vorhanden, Titan ist,
(b) 3 bis 47 at% Wolfram und zweiten legierenden Substituenten, wobei die zweiten legierenden Substituten aus Chrom, Molybdän, Vanadium, Tantal und Niob bestehen, wobei Wolfram oder Wolfram und Chrom in einer Menge von 0 bis 5 at% vorliegen, wobei Wolfram oder Wolfram und Molybdän in einer Menge von 0 bis 25 at% vorliegen,
wobei Wolfram oder Wolfram und Vanadium in einer Menge von 0 bis 5 at% vorliegen, und
wobei Wolfram oder Wolfram und Tantal, Wolfram und Niob oder Wolfram und Tantal und Niob in einer Menge von 0 bis 20 at% vorliegen, und der Rest, falls vorhanden, Wolfram ist,
(c) 30 bis 55 at% Kohlenstoff,
(d) wobei die prozentualen Atommengen von Niob und Tantal, einzeln oder in Kombination, niemals 20 at% übersteigen, und
(e) wobei die gesamten at% aller Bestandteile 100 at% sind und alle Bestandteile der Legierung normale handelsübliche Reinheit aufweisen.

21. Verwendung gemäß einem der Ansprüche 12, 13, 16, 17, 18, 19 oder 20, wobei die geformten Hilfsstoffe zu Kugeln geformt sind.

## Revendications

1. Procédé de broyage d'un produit dans un broyeur à corps broyant, **caractérisé par** l'étape consistant à utiliser un corps broyant comprenant un matériau multi-carbure de carbone et au moins deux éléments de formation de carbure, dans lequel ledit multi-carbure est formé en tant que corps broyant à utiliser dans un broyeur à corps broyant.

2. Procédé selon la revendication 1, dans lequel lesdits éléments de formation de carbure sont choisis dans le groupe comprenant le chrome, le hafnium, le molybdène, le niobium, le rhénium, le tantale, le thallium, le titane, le tungstène, le vanadium et le zirconium.

3. Procédé selon les revendications 1 ou 2, dans lequel ledit matériau multi-carbure comprend en outre un élément de formation de carbure dans son état élémentaire.

4. Procédé selon la revendication 3, dans lequel ledit matériau multi-carbure comprend en outre au moins un desdits éléments formant carbure dudit matériau multi-carbure dans son état élémentaire.

5. Procédé selon la revendication 1, dans lequel ledit corps broyant consiste sensiblement en du titane, du tungstène et du carbone, dans les proportions allant de 10 à 90% de tungstène, de 2 à 97% de titane, et le solde étant du carbone.

6. Procédé selon la revendication 1, dans lequel ledit corps broyant consiste sensiblement en 10 à 40% de carbone; 5 à 50% de titane, et le solde étant du tungstène.

7. Procédé selon la revendication 1, dans lequel ledit corps broyant comprend :
un matériau multi-carbure consistant sensiblement en 10 à 40% de carbone; 5 à 50% de titane, et le solde étant du tungstène ; et
au moins un matériau choisi parmi le molybdène, le chrome et le rhénium;
dans lequel ledit au moins un matériau est présent dans une proportion allant de 0 à 20%, le tungstène restant dans la composition n'étant pas inférieur à 10%.

8. Procédé selon la revendication 1, dans lequel ledit corps broyant comprend un matériau multi-carbure consistant sensiblement en 20 à 30% de carbone ; 5 à 50% de titane ; 0 à 30% d'au moins un premier matériau choisi parmi le rhénium, le zirconium, le hafnium et le molybdène ; 0 à 10% d'au moins un second matériau choisi parmi le vanadium, le niobium et le tantale ; 0 à 20% de chrome ; le solde étant du tungstène dans une proportion supérieure ou égale à 10%.

9. Procédé selon la revendication 1, dans lequel ledit corps broyant comprend un matériau multi-carbure consistant sensiblement en :
(a) de 15 à 60% de titane et de premiers substituants d'alliage, dans lequel les premiers substituants d'alliage consistent en du hafnium, du niobium, du tantale et du zirconium ; et
dans lequel le titane, le titane et le niobium ou le titane et le niobium et le tantale sont présents dans une proportion de 0 à 20% ; dans lequel le titane ou le titane et le zirconium sont présents dans une proportion de 0 à 10% ; et dans lequel le titane ou le titane et le hafnium sont présents dans une proportion de 0 à 30% ; le solde, s'il en est, étant du titane ;
(b) de 3 à 47% de tungstène et de seconds substituants d'alliage, dans lequel lesdits seconds substituants d'alliage consistent en du chrome, du molybdène, du vanadium, du tantale et du niobium ; dans lequel le tungstène ou le tungstène et le chrome sont présents dans une proportion de 0 à 5% ; dans lequel le tungstène ou le tungstène et le molybdène sont présents dans une proportion de 0 à 25% ;
dans lequel le tungstène ou le tungstène et le vanadium sont présents dans une proportion de 0 à 5% ; et
dans lequel le tungstène ou le tungstène et le tantale, le tungstène et le niobium, ou le tungstène et le tantale et le niobium sont présents dans une proportion de 0 à 20% ; et le solde, s'il en est, étant du tungstène ;
(c) de 30 à 55% de carbone ;
(d) dans lequel les pourcentages atomiques de niobium et de tantale, seuls ou combinés, ne dépassent jamais 20% ; et
(e) dans lequel le total en pourcentage de tous les constituants est de 100%, tous les constituants de l'alliage étant d'une pureté commerciale normale.

10. Procédé selon l'une quelconque des revendications 1, 2 et 4 à 8, comprenant en outre l'étape consistant à former ledit corps broyant en un corps broyant façonné dont la taille va de 0,5 micron à 100 mm de diamètre.

11. Procédé selon la revendication 10, comprenant en outre l'étape consistant à former ledit corps broyant en des sphères dont la taille va de 0,5 micron à 100 mm de diamètre.

12. Utilisation d'un corps broyant pour broyer un produit dans un broyeur à corps broyant, **caractérisée en ce que** le corps broyant est un matériau multi-carbure comprenant du carbone et au moins deux éléments distincts de formation de carbure, dans lequel ledit matériau multi-carbure est formé en un corps broyant façonné dont la taille va de 0,5 micron à 100 mm de diamètre.

13. Utilisation selon la revendication 1, dans laquelle lesdits éléments de formation de carbure sont choisis dans le groupe comprenant le chrome, le hafnium, le molybdène, le niobium, le rhénium, le tantale, le thallium, le titane, le tungstène, le vanadium et le zirconium.

14. Utilisation selon la revendication 12 ou 13, dans laquelle ledit matériau multi-carbure comprend en outre un élément de formation de carbure dans son état élémentaire.

15. Utilisation selon la revendication 12 ou 13, dans laquelle ledit matériau multi-carbure comprend en outre au moins un desdits éléments de formation de carbure dudit matériau multi-carbure dans son état élémentaire.

16. Utilisation selon la revendication 12, dans laquelle ledit corps broyant consiste sensiblement en du titane, du tungstène et du carbone.

17. Utilisation selon la revendication 12, dans laquelle ledit corps broyant consiste sensiblement en 10 à 40% de carbone; 5 à 50% de titane, et le solde étant du tungstène.

18. Utilisation selon la revendication 12, le
matériau multi-carbure consistant sensiblement en 10 à 40% de carbone; 5 à 50% de titane, et le solde étant du tungstène ; et
au moins un matériau choisi parmi le molybdène, le chrome et le rhénium ;
dans lequel ledit au moins un matériau est présent dans une proportion allant de 0 à 20%, le tungstène restant dans la composition n'étant pas inférieur à 10%.

19. Utilisation selon la revendication 12, le matériau multi-carbure consistant sensiblement en 20 à 30% de carbone ; 5 à 50% de titane ; 0 à 30% d'au moins un premier matériau choisi parmi le rhénium, le zirconium, le hafnium et le molybdène ; 0 à 10% d'au moins un second matériau choisi parmi le vanadium, le niobium et le tantale ; 0 à 20% de chrome ; le solde étant du tungstène dans une proportion supérieure ou égale à 10%.

20. Utilisation selon la revendication 12, le matériau multi-carbure consistant sensiblement en :
(a) de 15 à 60% de titane et de premiers substituants d'alliage, dans lequel les premiers substituants d'alliage consistent en du hafnium, du niobium, du tantale et du zirconium ; et
dans lequel le titane, le titane et le niobium ou le titane et le niobium et le tantale sont présents dans une proportion de 0 à 20% ; dans lequel le titane ou le titane et le zirconium sont présents dans une proportion de 0 à 10% ; et dans lequel le titane ou le titane et le hafnium sont présents dans une proportion de 0 à 30% ; le solde, s'il en est, étant du titane ;
(b) de 3 à 47% de tungstène et de seconds substituants d'alliage, dans lequel lesdits seconds substituants d'alliage consistent en du chrome, du molybdène, du vanadium, du tantale et du niobium ; dans lequel le tungstène ou le tungstène et le chrome sont présents dans une proportion de 0 à 5% ; dans lequel le tungstène ou le tungstène et le molybdène sont présents dans une proportion de 0 à 25%;
dans lequel le tungstène ou le tungstène et le vanadium sont présents dans une proportion de 0 à 5% ; et
dans lequel le tungstène ou le tungstène et le tantale, le tungstène et le niobium, ou le tungstène et le tantale et le niobium sont présents dans une proportion de 0 à 20% ; et le solde, s'il en est, étant du tungstène ;
(c) de 30 à 55% de carbone ;
(d) dans lequel les pourcentages atomiques de niobium et de tantale, seuls ou combinés, ne dépassent jamais 20% ; et
(e) dans lequel le total en pourcentage de tous les constituants est de 100%, tous les constituants de l'alliage étant d'une pureté commerciale normale.

21. Utilisation selon l'une quelconque des revendications 12, 13, 16, 17, 18, 19 ou 20, dans laquelle lesdits corps broyant formés sont en forme de sphères.
